(19) Europäisches Patentamt
European Patent Office
Office européen des brevets

(11) **EP 2 568 638 A1**

(12) **EUROPEAN PATENT APPLICATION**

(43) Date of publication:
**13.03.2013 Bulletin 2013/11**

(51) Int Cl.:
*H04L 1/00* (2006.01)    *H04B 1/7097* (2011.01)

(21) Application number: **11180676.6**

(22) Date of filing: **09.09.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Telefonaktiebolaget L M Ericsson (publ)**
**164 83 Stockholm (SE)**

(72) Inventors:
• **Kamuf, Matthias**
**222 37 Lund (SE)**

• **Berg, Jan-Erik**
**191 40 Sollentuna (SE)**
• **Dimou, Konstantinos**
**113 41 Stockholm (SE)**
• **Lindoff, Bengt**
**237 35 Bjärred (SE)**

(74) Representative: **Valea AB**
**Lindholmspiren 5**
**417 56 Göteborg (SE)**

(54) **Device and method for handling interference at a receiver by activating interference cancellation according to the amount of most interfering neighbouring cells**

(57) The embodiments herein relate to a method in a transceiver (700) for handling interference in the transceiver (700). The transceiver (700) is associated with a serving cell (103) in a communications network (100). The transceiver (700) is in a first decoding mode, and the transceiver (700) experiences interference from a plurality of neighbor cells (107). The transceiver (700) establishes a total number of neighbor cells comprised in the plurality of neighbor cells (107) generating the interference experienced by the transceiver (700). The transceiver (700) changes to a second decoding mode when the total number of neighbor cells (107) is above a first threshold. The second decoding mode cancels interference experienced by the transceiver (700).

Fig. 1

EP 2 568 638 A1

Printed by Jouve, 75001 PARIS (FR)

**Description**

TECHNICAL FIELD

Embodiments herein relate generally to a transceiver and a method in the transceiver, and to a base station and a method in the base station. More particularly the embodiments herein relate to handling of interference in the transceiver.

BACKGROUND

In a typical cellular network, also referred to as a communication network, User Equipments (UEs), communicate via a Radio Access Network (RAN) to one or more Core Networks (CN).

A user equipment is a mobile terminal by which a subscriber may access services offered by an operator's core network and services outside the operator's network to which the operator's RAN and CN provide access. The user equipments may be for example communication devices such as mobile telephones, cellular telephones, or laptops with wireless capability. The user equipments may be portable, pocket-storable, hand-held, computer-comprised, or vehicle-mounted mobile devices, enabled to communicate voice and/or data, via the radio access network, with another entity, such as another mobile station or a server.

User equipments are enabled to communicate wirelessly in the cellular network. The communication may be performed e.g. between two user equipments, between the user equipment and a regular telephone and/or between the user equipment and a server via the radio access network and possibly one or more core networks, comprised within the network.

The cellular network covers a geographical area which is divided into cell areas. Each cell area is served by a Base Station (BS), e.g. a Radio Base Station (RBS), which sometimes may be referred to as e.g. evolved Node B (eNB), eNodeB, NodeB, B node or Base Transceiver Station (BTS), depending on the technology and terminology used. The base station communicates over the air interface operating on radio frequencies with the user equipment(s) within range of the base station.

In telecommunications, the term interference may be defined as anything which alters, modifies, or disrupts a signal as it travels along a channel between a source and a receiver, e.g. between a base station and a user equipment. The term typically refers to the addition of unwanted signals to a useful signal. For example, interference may cause voice quality to drop, call drop, link and network performance degradation etc. However, it is possible to cancel or reduce the interference. Interference cancelling comprises reduction or removal of an undesired component from a signal, which signal comprises both a desired signal and an undesired signal.

In a near future, Interference Cancelling (IC) capable user equipments are a reality. Using IC, other data streams/users and/or arbitrary signals may be estimated and subtracted from the desired data stream and thereby significantly improve the link performance for user equipments that experience significant inter/intra-cell interference. Apart from the common homogeneous network layouts, such advanced receiver features of the user equipments will become especially important in heterogeneous network deployments that are currently standardized.

Interference cancelling typically comprises multiple coding and decoding steps, which significantly increase the total processing cost and hence increases a user equipments power consumption. While there are scenarios where these techniques are necessary to maintain good link performance, there are also scenarios where this kind of processing is not needed, for example when there is actually no intra/inter-cell interference at all and in this case, IC might even degrade the performance, or even when the UE is within an area or cell where previous measurements and other previous knowledge of the network has shown that interference in this area originates only from 1 or 2 neighbor cells. In such a case, other techniques such as Fractional Frequency Reuse (FFR), fractional power control, Relative Narrowband Transmit Power (RNTP) and other Radio Resource Management (RRM) techniques may reduce other cell interference only by actions taken by the network. Thereby always using IC in a battery driven user equipment is an unnecessary use of the processing resources and battery power.

SUMMARY

The objective of embodiments herein is therefore to obviate at least one of the above disadvantages and to provide improved handling of interference in a communications network.

According to a first aspect, the objective is achieved by a method in a transceiver for handling interference in the transceiver. The transceiver is associated with a serving cell in a communications network. The transceiver is in a first decoding mode. The transceiver experiences interference from a plurality of neighbor cells. The transceiver establishes a total number of neighbor cells comprised in the plurality of neighbor cells generating the interference experienced by the transceiver. The transceiver changes to a second decoding mode when the total number is above a first threshold.

The second decoding mode cancels interference experienced by the transceiver.

According to a second aspect, the objective is achieved by a method in a base station for handling interference in a transceiver. The base station is associated with a serving cell in a communications network. The transceiver is in a first decoding mode and associated with the serving cell. The base station determines a change to a second decoding mode when a total number of neighbor cells comprised in a plurality of neighbor cells is above a first threshold. The plurality of neighbor cells generates interference experienced by the transceiver. The base station sends, to the transceiver, information about the determining of the change to the second decoding mode. The second decoding mode cancels interference in the transceiver.

According to a third aspect, the objective is achieved by a transceiver for handling interference in the transceiver. The transceiver is associated with a serving cell in a communications network. The transceiver is in a first decoding mode, and the transceiver experiences interference from a plurality of neighbor cells. The transceiver comprises an establishing unit configured to establish a total number of neighbor cells comprised in the plurality of neighbor cells generating the interference experienced by the transceiver. The transceiver further comprises a changing unit configured to change to the second decoding mode when the total number of neighbor cells is above a first threshold. The second decoding mode cancels interference in the transceiver.

According to a fourth aspect, the objective is achieved by a base station for handling interference in a transceiver. The base station is associated with a serving cell in a communications network. The transceiver is in a first decoding mode and is associated with the serving cell. The base station comprises a determining unit configured to determine a change to the second decoding mode when a total number of neighbor cells comprised in a plurality of neighbor cells is above a first threshold. The plurality of neighbor cells generates interference experienced by the transceiver. The base station further comprises a sending unit configured to send, to the transceiver, information about the determining of the change to the second decoding mode. The second mode cancels interference in the transceiver.

Embodiments herein afford many advantages, of which a non-exhaustive list of examples follows:

An advantage of the embodiments herein is that it is possible to dynamically and autonomously determine the best transceiver technique on-the-fly, i.e. to enable and disable IC functionality.

By enabling interference cancelling only when it is necessary, another advantage of the embodiments herein is that they reduce the total processing cost and hence a user equipment's power consumption. Further, the link performance of the communications network is also improved.

The embodiments herein are not limited to the features and advantages mentioned above. A person skilled in the art will recognize additional features and advantages upon reading the following detailed description.

BRIEF DESCRIPTION OF THE DRAWINGS

The embodiments herein will now be further described in more detail in the following detailed description by reference to the appended drawings illustrating the embodiments and in which:

Fig. 1        is a schematic block diagram illustrating embodiments of a communications network.

Fig. 2        is a flow chart illustrating embodiments of a method in a transceiver.

Fig. 3        is a flow chart illustrating embodiments of a method in a transceiver.

Fig. 4        is a flow chart illustrating embodiments of a method in a base station.

Fig. 5        is a schematic block diagram illustrating embodiments of a communications network.

Fig.6a-d     are flow charts illustrating embodiments of a method in a transceiver.

Fig. 7        is a schematic block diagram illustrating embodiments of a transceiver.

Fig. 8        is a flow chart illustrating embodiments of a method in a base station.

Fig. 9        is a schematic block diagram illustrating embodiments of a base station.

The drawings are not necessarily to scale and the dimensions of certain features may have been exaggerated for the sake of clarity. Emphasis is instead placed upon illustrating the principle of the embodiments herein.

DETAILED DESCRIPTION

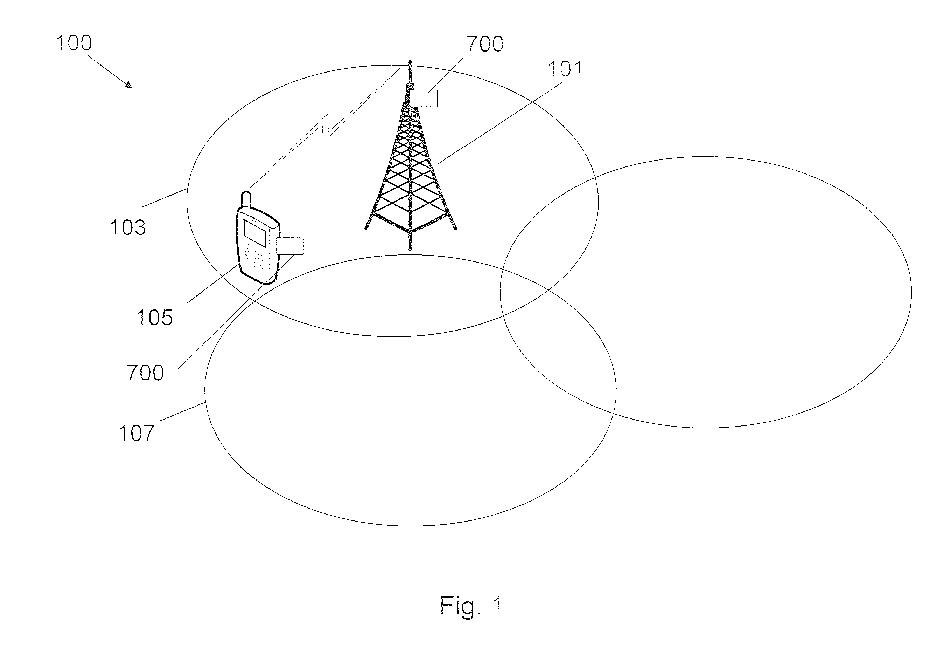

**Figure 1** depicts a **communications network 100** in which embodiments herein may be implemented. The communications network 100 may in some embodiments apply to one or more radio access technologies such as for example Long Term Evolution (LTE), LTE Advanced, Wideband Code Division Multiple Access (WCDMA), Global System for Mobile Communications (GSM), Evolution-Data Optimized (EV-DO)/CDMA or any other Third Generation Partnership Project (3GPP) radio access technology.

The communications network 100 comprises a **base station 101** serving a **cell 103**. The cell 103 may be referred to as a serving cell. The base station 101 may be a base station such as a NodeB, an evolved NodeB (eNB), BTS or any other network unit capable to communicate over a radio carrier with a **user equipment 105** being present in the cell 103. A **neighbor cell** 107 may also be comprised in the communications network 100. The neighbor cell 107 is a cell which is a neighbor to the serving cell 103.

The user equipment 105 may be any suitable communication device or computational device with communication capabilities capable to communicate with the base station 101 over a radio channel, for instance but not limited to mobile phone, smart phone, Personal Digital Assistant (PDA), laptop, MP3 player or portable Digital Versatile Disk (DVD) player, or similar media content devices, digital camera, or even stationary devices such as a Personal Computer (PC). A PC may also be connected via a mobile station as the end station of the broadcasted/multicasted media. The user equipment 105 may also be an embedded communication device in e.g. electronic photo frames, cardiac surveillance equipment, intrusion or other surveillance equipment, weather data monitoring systems, vehicle, car or transport communication equipment, etc. The user equipment 105 is referred to as UE in some of the figures.

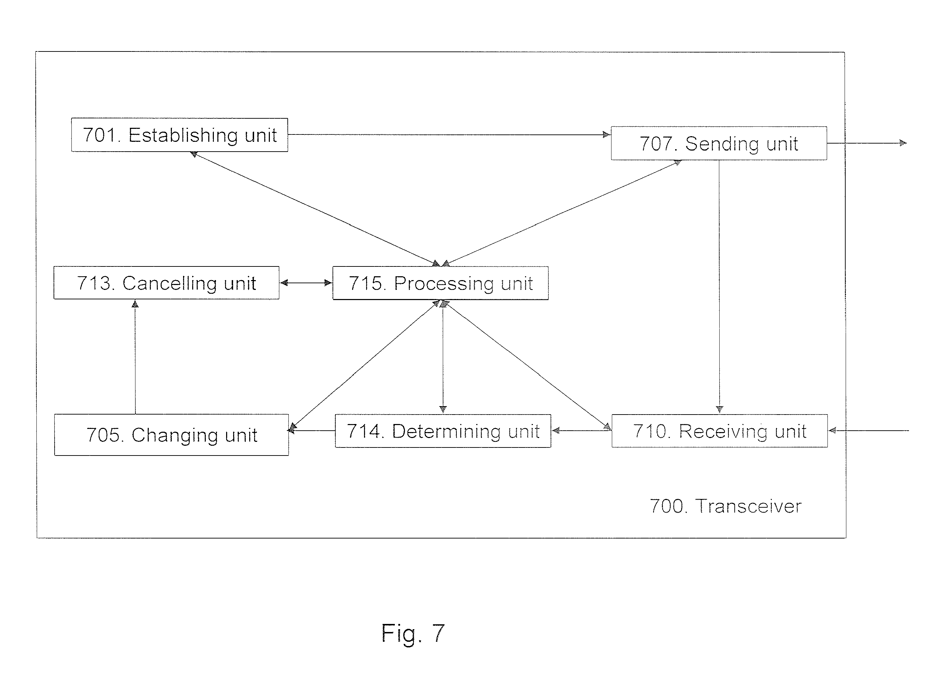

The user equipment 105 and/or the base station 101 comprise a **transceiver 700**. The reference number 700 is not shown in figure 1. However the reference number 700 refers to figure 7, which will be describe in more detail later. A transceiver 700 is a device that has both a transmitter and a receiver. The transceiver 700 is configured to operate in either a non-interference cancelling (non-IC) mode or an interference cancelling (IC) mode. In some embodiments, the non-IC mode is referred to as first decoding mode and the IC mode is referred to as second decoding mode. The transceiver 700 comprises a physical layer receiver which is configured to perform the interference cancelling.

The embodiments herein relate to deciding when to switch on or to switch off the IC functionality in the transceiver 700. With IC functionality, what is meant here is the interference cancellation in at least one of the data and the control domain. The embodiments herein detect if the downlink other cell interference comes from several other neighbor cells 107, or if it comes from 1-2 neighbor cells 107. In case the interference comes from only a couple of neighbor cells 107, then RRM techniques, i.e. classical Inter Cell Interference Coordination (ICIC), such as FFR, or the use of RNTP, or their combinations may reduce other cell interference, without the need for the transceiver 700 to switch on the IC. In the following the term ICIC implies all of the RRM techniques having as goal to minimize other cell interference, unless if the exact name of the RRM technique is specified. In case the interference comes from several other neighbor cells 107, other cell interference may not be reduced only with RRM techniques and the transceiver 700 switches on the IC functionality. In this case, the network, on the basis of measurements performed/provided by the transceiver 700, decides the neighbor cell 107 on which IC is going to be applied and for which cells other cell interference is going to be minimized by RRM.

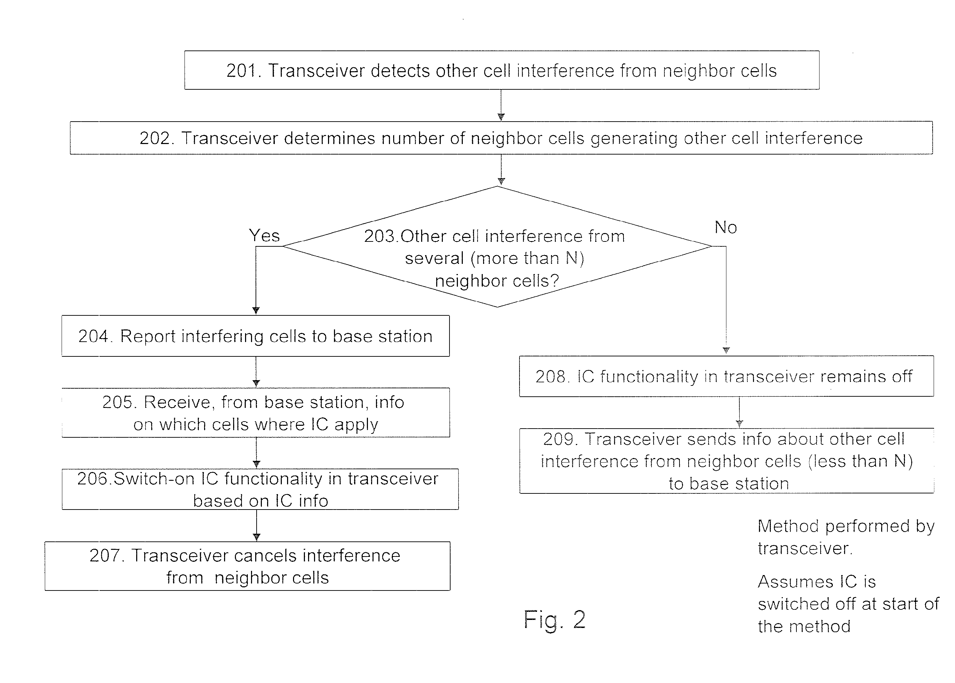

**Figure 2** is a flow chart illustrating embodiments of a method in the transceiver 700. The second decoding mode, i.e. IC, is disabled in the transceiver 700. The transceiver 700 may be comprised in the user equipment 103 or in the base station 101. The method comprises the following steps, which steps may as well be carried out in another suitable order than described below.

Step 201

The transceiver 700 detects other cell interference from neighbor cells 107. Other cell interference is interference from cells other than the serving cell 103.

Step 202

The transceiver 700 determines the number of neighbor cells 107 generating the detected interference.

Step 203

The transceiver 700 determines if the detected interference comes from, i.e. is generated by, several, i.e. more than N, neighbor cells 107. The number N may be from 3 and up.

Step 204

If the number of neighbor cells 107 generating the detected interference is more than N, i.e. the yes-branch in figure 2, the transceiver 700 sends a report about the interfering neighbor cells 107 to base station 101. The report may comprise information about the number of interfering neighbor cells 107, the amount of interference generated by the neighbor cells 1 07, the identity of the interfering neighbor cells 1 07, the signaling strength i for the respective neighbor cell 107 etc.

Step 205

This step is performed after step 204. The transceiver 700 receives, from the base station 101, information on which neighbor cells 107 where IC apply, i.e. for which neighbor cells 107 the transceiver 700 may cancel the detected interference. By receiving information on which neighbor cells 107 where IC applies, the transceiver 700 implicitly receives information on which neighbor cells 107 where IC shall not apply. In other words, the base station 101 has made a decision on where IC shall apply.

Step 206

This step is performed after step 205. Based on the information received in step 205, the transceiver 700 switches on the IC functionality.

Step 207

This step is performed after step 206. The transceiver 700 cancels interference from the neighbor cells 107 using IC. The interference is cancelled from the neighbor cells 107 for which the transceiver 700 has received information about in step 205. In some embodiments, the interference is cancelled via specific processing at the physical layer receiver of the transceiver 700.

Step 208

This step is performed instead of steps 204 - 207. If the number of neighbor cells 107 generating the detected interference is lower than N, i.e. the no-branch in figure 2, the IC functionality in transceiver 700 remains off.

Step 209

This step is performed after step 208. The transceiver 700 sends information about the interference from the neighbor cells 107, i.e. less than N, to the base station 101. The information may be the number of interfering neighbor cells 107, the amount of interference generated by the neighbor cells 107, the identity of the interfering neighbor cells 107 etc.

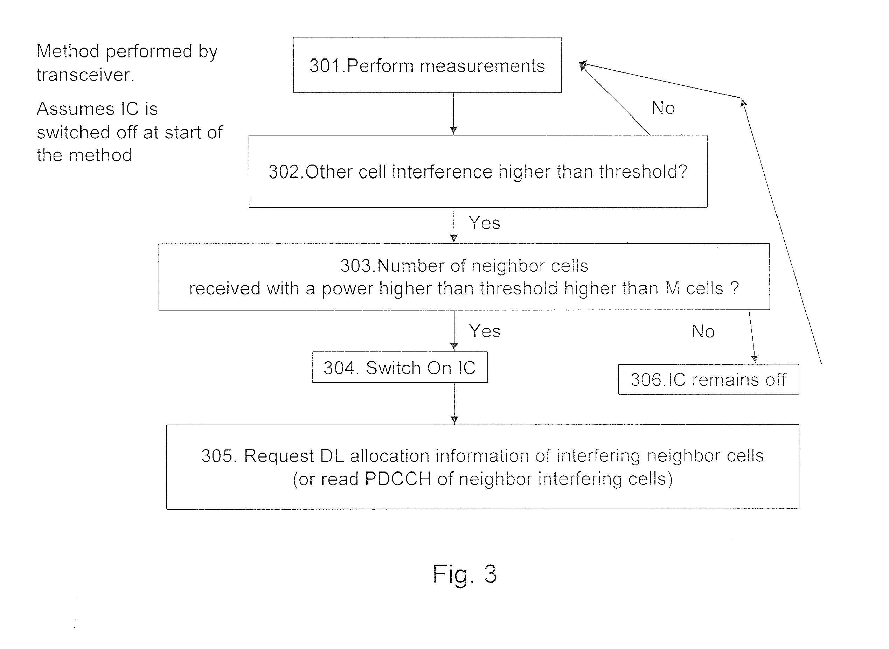

**Figure 3** is a flow chart illustrating embodiments of a method in the transceiver 700. Figure 3 comprises more details about how the transceiver 700 may determine to switch on the IC. The second decoding mode, i.e. IC, is disabled in the transceiver 700. The transceiver 700 may be comprised in the user equipment 105 or in the base station 101. The method comprises the following steps, which steps may as well be carried out in another suitable order than described below.

Step 301

The transceiver 700 performs measurements associated with the detected interference from neighbor cells 107.

The transceiver 700 comprises a number of mechanisms which allow the detection of the number of interfering neighbor cells 107. For example, within 3GPP LTE, the user equipment 105 performs measurement of the total received power, e.g. a Received Signal Strength Indicator (RSSI), which gives information about useful power and other cell interference. In addition, the transceiver 700 measures the received power associated with reference symbols transmitted by the serving cell 103, i.e. Reference Signal Received Power (RSRP), as well as RSRP associated with the detected neighboring cells 107. The neighbor cells 107 may be detected by cell search. On the basis of these measurements, i.e. the measured RSRP levels, the transceiver 700 may have a first estimate of the interference generated by the neighbor cells 107. In some embodiments, more advanced methods may also be used.

The interference generated by the neighbor cells 107 and received by the transceiver 700 may be denoted $I\_DL$. It may be assumed that a thermal noise level, $N\_0$, is known at the user equipment 105. The $I\_DL$ may be defined as:

$$I\_DL = RSSI - RSRP - N\_0 \qquad\qquad \text{Equation 1}$$

Step 302

The transceiver 700 checks if the other cell interference is higher than a threshold. In case the interference, e.g. the downlink other cell interference, is above a given level, *I_threshold,* i.e.

$$I\_DL \geq I\_Threshold \qquad\qquad \text{Equation 2}$$

the transceiver 700 checks the RSRP values received by the neighbor cells 107. If the interference is not higher than the threshold, the method goes back to step 301, i.e. the first "no" branch in figure 3.

Step 303

This step is performed if step 302 above detected that the interference is higher than the threshold, the first "yes" branch in figure 3.
The transceiver 700 checks if the number of cells received with a power higher than the threshold, is higher than M cells.
The transceiver 700 checks the RSRP values received by the neighbor cells 107. The transceiver 700 checks that the amount M of neighbor cells 107 with RSRP values above a given level *RSRP_threshold* is higher than *M_ threshold,* i.e.:

$$M \geq M\_Threshold \qquad\qquad \text{Equation 3}$$

, where M is the number of neighbor cells 107 with

$$RSRP \geq RSRP\_Threshold \qquad\qquad \text{Equation 4}$$

where M is the number of neighbor cells 107 with $RSRP \geq RSRP\_Threshold.$

Step 304

This step corresponds to step 206 in figure 2, and is performed if $M \geq M\_Threshold$ in step 303 above, i.e. the second "yes" branch in figure 3.
In some embodiments, the transceiver 700 takes its own decision, based on the measurements above, that activation of IC should be done.
In some embodiments, it is the base station 101 that takes the decision to activate the IC. In that case, the transceiver 700 sends information to the base station 101 about the measurements performed in steps 301-304, which forms a basis for the base station's 101 decision.
If $M \geq M\_Threshold$ then the transceiver 700 activates its IC functionality.
In the case the serving base station 101 decides the neighbor cell 107 from which interference is going to be cancelled in the transceiver 700, the neighbor cell 107 might be either:

   i) the neighbor cell 107 with the strongest RSRP, after the serving cell 103, reported by the transceiver 700 in discussion, or

   ii) if the neighbor cell 107 with the strongest RSRP is not served by the same base station 101, then it might be the neighbor cell 107 with the strongest RSRP among the ones controlled by the same base station 101. In case the communicating interface between neighbor base stations 101 is very fast, then the neighbor cell 107 with the strongest RSRP is chosen.

Step 305

This step is performed after step 304.

Once the decision of the neighbor cell 107, from which the interference is going to be cancelled, is done, then the serving base station 101 requests the selected neighbor cell 107, i.e. the base station 101 in the selected neighbor cell 107, to transmit information about the scheduling allocations, e.g. information about the downlink or uplink scheduling allocation, so as to be able to cancel interference from this neighbor cell 107. The information may be allocation parameters on the Physical Resource Blocks (PRBs) on which the transceiver 700 in question is receiving high DownLink (DL) interference. The allocation parameters may be the Physical Dedicated Control Channel (PDCCH) info, i.e. transport block format, modulation & coding scheme, pre-coding information, Radio Network Temporary Id (RNTI) of the transceiver 700 at the neighbor cell 107 to which these PRBs are allocated, control for spatial multiplexing.

Alternatively, the transceiver 700 may read information about the scheduling allocations, e.g. downlink or uplink, of this neighbor cell 107. The transceiver 700 is notified by the serving base station 101 about that. The information may be PDCCH information of the neighbor interfering cells 107. This alternative though is applicable only when the transceiver 700 is located within the user equipment 105.

Step 306

This step corresponds to step 208 in figure 2, and is performed if $M < M\_Threshold$ in step 303 above, i.e. the second no branch in figure 3.

if $M < M\_Threshold,$ then the IC functionality in the transceiver 700 remains off.

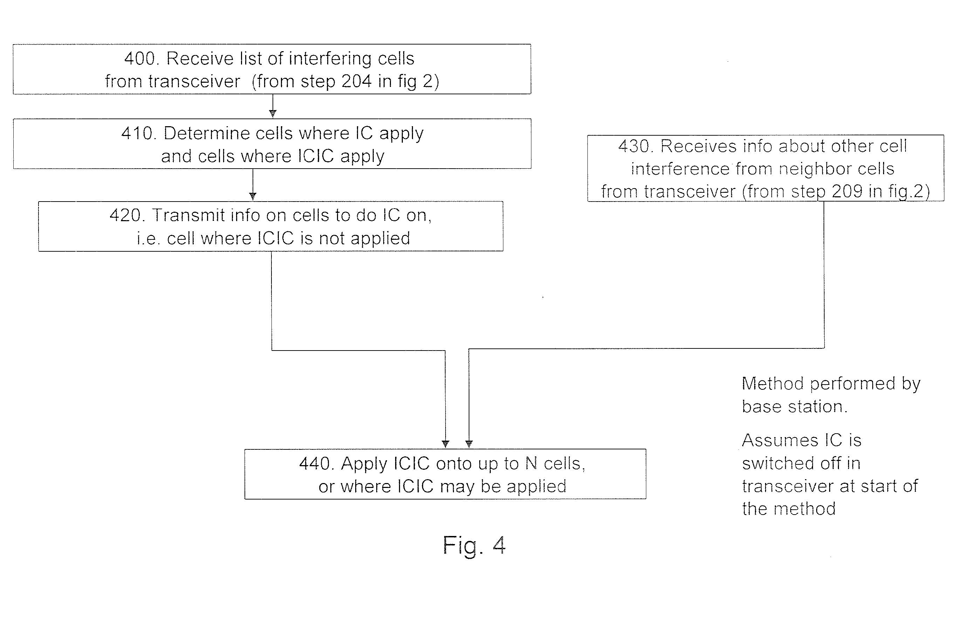

**Figure 4** is a flow chart illustrating embodiments of a method in the base station 101. The base station 101 may comprise the transceiver 700. In some embodiments, interference cancelling is disabled in the first decoding mode and interference cancelling is enabled in the second decoding mode. The method comprises the following steps, which steps may as well be carried out in another suitable order than described below.

Step 400

This step corresponds to step 204 in fig 2, where the transceiver 700 sends the information to the base station 101.

The base station 101 receives information about the interfering neighbor cells 107, i.e. when the number of interfering neighbor cells 107 is more than N, from the transceiver 700. In some embodiments, the information may be in the form of a list.

In some embodiments, this information is the measurements performed by the transceiver 700 in steps 301 - 303 in figure 3.

Step 410

The base station 101 determines which neighbor cells 107 of the interfering neighbor cells 107 where the IC shall apply, and thereby also which neighbor cells 107 of the interfering neighbor cells where ICIC or other RRM techniques for interference minimization shall apply, i.e. where IC does not apply.

Step 420

The base station 101 transmits information to the transceiver 700 on which neighbor cells 107 the base station 101 has determined which neighbor cells 107 the transceiver 700 should do IC on, i.e. neighbor cells 107 where ICIC is not applied. In some embodiments, the base station 101 further transmits information to the transceiver 700 on the DL allocation information of interfering neighbor cells (107)

Step 430

The base station 101 receives information about the interference from neighbor cells 107 when the number of interfering neighbor cells 107 is less than N. This information is the one sent by the transceiver 700 in step 209 in figure 2.

Step 440

The base station handles, e.g. tries to minimize, interference using ICIC on the neighbor cells 107 less than N, or on the neighbor cells 107 where ICIC apply. In other words, ICIC is applied onto up to N cells, or where ICIC may be applied.

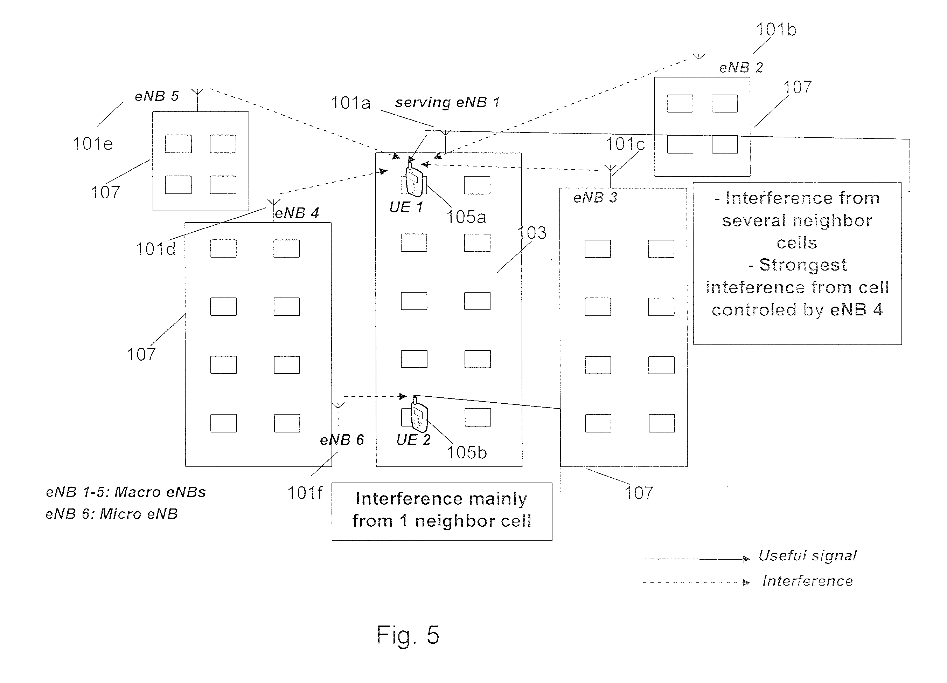

**Figure 5** is a schematic illustration of an embodiment of a deployment scenario in a metropolitan area, where one or several **first user equipment(s) 105a**, UE 1, receive interference from several neighbor base stations 101, e.g. from non-serving cells controlled by a **serving first base station** 101 a, eNB1, a **second base station 101b**, eNB2, a **third base station 101c**, eNB3, a **fourth base station 101d**, eNB4, and a fifth **base station 101e**, eNB5. The serving first base station 101 a is located in a serving cell 103. Each of the second base station 101 b, the third base station 101 c, the fourth base station 101d and the fifth base station 101 e are located in a respective neighbor cell 107, where each neighbor cell 107 is a neighbor to the serving cell 103. In figure 5, each building represents a cell. Further, in figure 5, the straight line illustrates a useful signal and the dotted line illustrates interference. The serving first base station 101 a, the second base station 101 b, the third base station 101 c, the fourth base station 101 d and the fifth base station 101 e may be macro base stations, macro eNBs. The first user equipment 105a may be typically located in the highest floors of e.g. a skyscraper. A **second user equipment 105b**, UE 2, located at the lowest floors, or at ground level, receives mainly interference from micro base stations located close and placed usually indoors, e.g. a **sixth base station 101f**, eNB 6. In such a case, it is possible that cells controlled by macro base stations 101 a, 101 b, 101 c, 101d, 101e located at the top floors of skyscrapers request the user equipments 105a, 105b in the cells 103, 107 to report their distance, location in the cell 103, 107. In case it is known that the base station 101 is located at the rooftop of a skyscraper, with a large distance from neighbor buildings, then distance is sufficient. Otherwise, GPS 3D coordinates may be needed. In case, GPS cannot provide 3D coordinates, then a combination of 2D GPS coordinates & of distance might be needed. This notification may be done via broadcasting. The user equipments 105a, 105b may measure their distance to the serving base station 101, referred to as a macro eNB, by using positioning techniques, or similar. The first user equipment 105a which is positioned at a short distance to the serving macro eNB 101 a is the one located at the highest floors of skyscrapers, and hence the ones susceptible in receiving interference from several neighbor cells 107. A short distance may be, in this case and for macro base station, less than 30-40 meters.

Hence, the distance to the serving base station 101 a located at the top floor of a skyscraper is information which is in addition to the number of neighbor cells 107 generating significant interference to be considered in these metropolitan environments. The second user equipment 105b, due to its relatively long distance to the serving macro base station 101 a, is not susceptible in receiving interference from several neighbor cells 107.

In figure 5, there is interference from several neighbor cells 107. The strongest interference comes from the neighbor cell 107 controlled by the fourth base station 101d, i.e. eNB 4. Interference cancelation applied within the first user equipment 105a so as to cancel interference from the fourth base station 101d, i.e. eNB4. Other sources of interference are removed by RRM based ICIC. No interference cancelation is applied within the second user equipment 105b. RRM based ICIC minimizes interference from the sixth base station, i.e. eNB6, 101f.

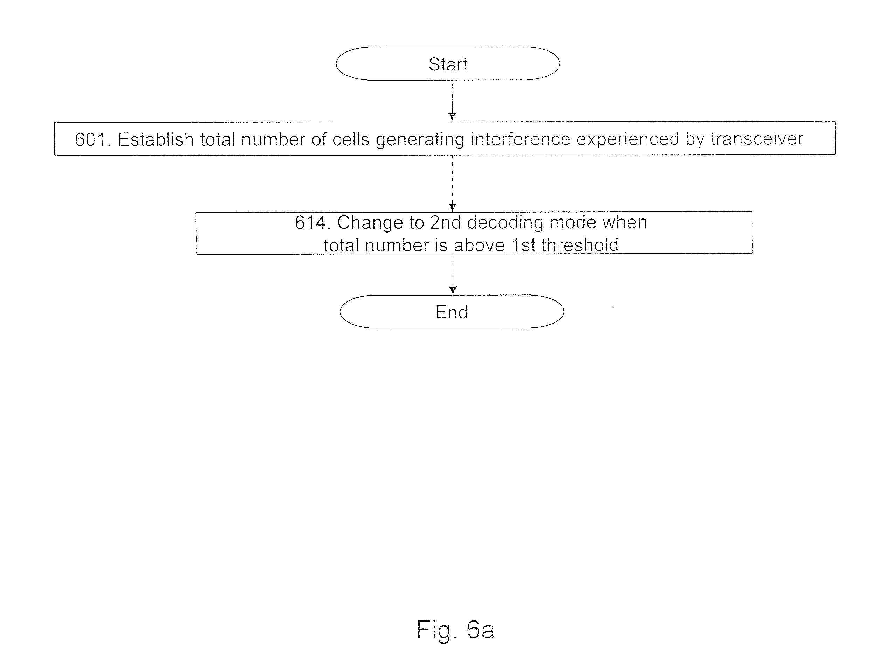

The method described above will now be described seen from the perspective of transceiver 700. **Figure 6a-d** are flowcharts describing the present method in the transceiver 700, for handling interference in the transceiver 700. The transceiver 700 is associated with a serving cell 103 in a communications network 100. The transceiver 700 is in a first decoding mode. The transceiver 700 experiences interference from a plurality of neighbor cells 107. In some embodiments, interference cancellation is disabled in the first decoding mode and interference cancellation is enabled in a second decoding mode. In some embodiments, the transceiver 700 is comprised in a user equipment 105 or in a base station 101. The method comprises the following steps to be performed by first transceiver 700:

Step 601

This step is illustrated in figure 6a.
This step corresponds to step 202 in figure 2.
The transceiver 700 establishes a total number of neighbor cells comprised in the plurality of neighbor cells 107 generating the interference experienced by the transceiver 700.

Step 602

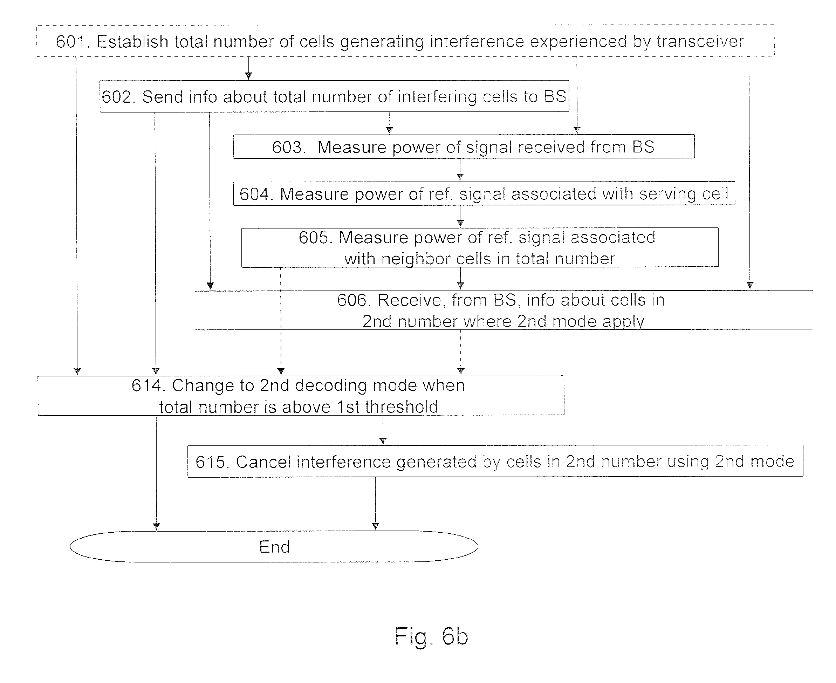

This step is illustrated in figure 6b.
This step corresponds to step 204 in figure 2.
In some embodiments, the transceiver 700 sends, to a base station 101, information about the neighbor cells 107 comprised in the total number. In other words, the transceiver 700 sends information about the total number of interfering cells 107 to the base station 101.

Step 603

This step is illustrated in figure 6b.
This step corresponds to step 301 in figure 3.
In some embodiments, the transceiver 700 measures a power of a signal received from a base station 101. The power of the signal received from a base station 101 may be referred to as RSSI.

Step 604

This step is illustrated in figure 6b.
This step corresponds to step 301 in figure 3.
In some embodiments, the transceiver 700 measures a power of a reference signal associated with the serving cell 103. The power of the reference Signal associated with i the serving cell 103 may be referred to as RSRP for the serving cell.

Step 605

This step is illustrated in figure 6b.
This step corresponds to step 301 in figure 3.
In some embodiments, the transceiver 700 measures a power of a reference signal associated with the neighbor cells 107 comprised in the total number of neighbor cells 107. The power of the reference signal associated with the neighbor cells 107 may be referred to as RSRP for the neighbor cells 107.

Step 606

This step is illustrated in figure 6b.
This step corresponds to step 205 in figure 2.
In some embodiments, the transceiver 700 receives, from the base station 101, information about neighbor cells 107 comprised in a second number of neighbor cells 107 where the second decoding mode apply. The second number of neighbor cells 107 is lower or equal than the total number.

Step 607

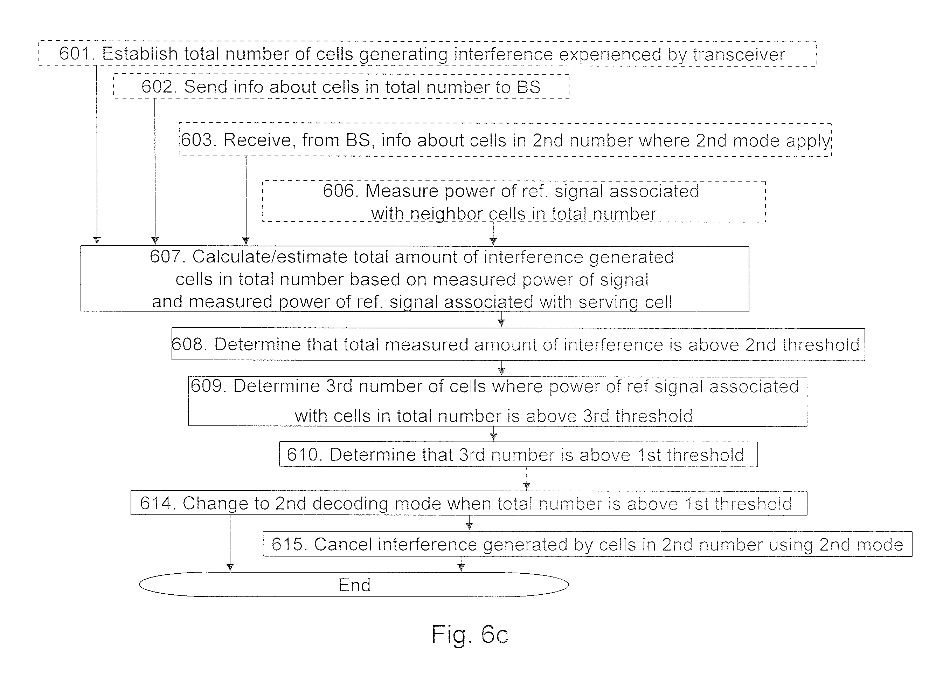

This step is illustrated in figure 6c.
This step corresponds to step 302 in figure 3.
In some embodiments, the transceiver 700 calculates or estimates a total amount of interference generated by the neighbor cells 107 in the total number based on the measured power of the signal and the measured power of the reference signal associated with the serving cell 103. In other words, $I\_DL = RSSI-RSRP-N\_0.$ *The* interference is created by all neighbor cells which the transceiver 700 "sees" in e.g. downlink.

Step 608

This step is illustrated in figure 6c.
This step corresponds to steps 302 and 303 in figure 3.
In some embodiments, the transceiver 700 determines that the total measured amount of interference is above a second threshold, i.e. $I\_DL \geq I\_Threshold$ .
In some embodiments, when the total measured amount of interference is above a second threshold, the transceiver 700 determining that the power of the reference signal associated with the neighbor cells 107 in the total number of neighbor cells 107 is above a third threshold, i.e. $RSRP \geq RSRP\_ Threshold$ .

Step 609

This step is illustrated in figure 6c.
This step corresponds to step 303 in figure 3.
In some embodiments, the transceiver 700 determines a third number of neighbor cells 107 where the power of the reference signal associated with the neighbor cells 107 in the total number of neighbor cells 107 is above the third threshold. The neighbor cells 107 comprised in the third number of neighbor cells 107 is a subgroup of the neighbor cells 107 in the total number. In other words, the transceiver 700 determines M for $RSRP \geq RSRP\_Threshold.$

Step 610

This step is illustrated in figure 6c.

This step corresponds to step 303 in figure 3.

In some embodiments, the transceiver 700 determines that the third number of neighbor cells 107 is above the first threshold, i.e. $M \geq M\_Threshold$ .

Step 611

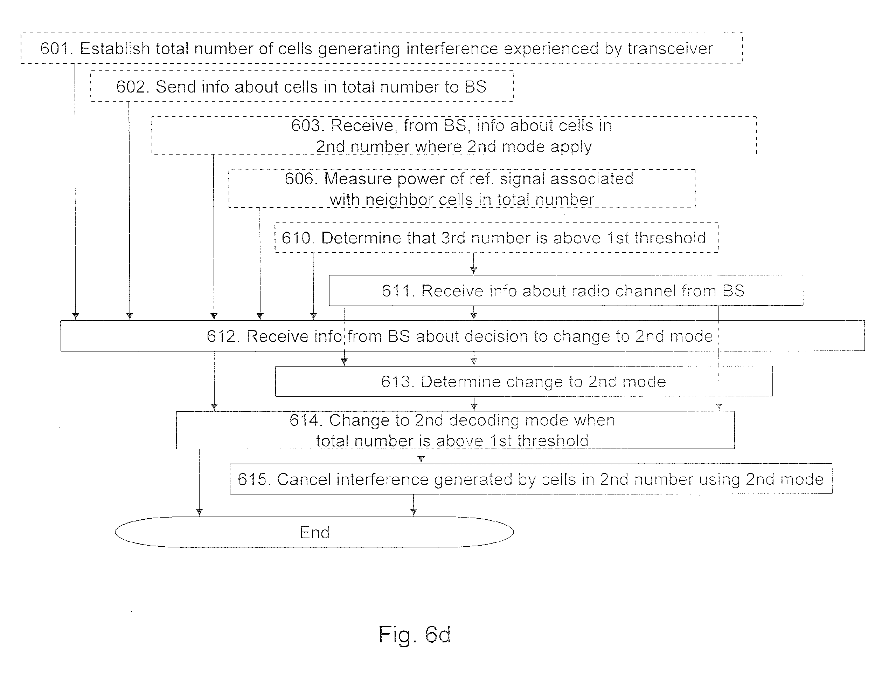

This step is illustrated in figure 6d.

This step corresponds to step 306 in figure 3.

In some embodiments, the transceiver 700 receives information about a radio channel from the base station 101.

In some embodiments, the transceiver 700 may send, to the base station 101, a request for information about a radio channel associated with the neighbor cells 107 in the total number; and

Step 612

This step is illustrated in figure 6d.

This step corresponds to step 205 in figure 2.

In some embodiments, the transceiver 700 receives information from the base station 101 about a decision to change to the second decoding mode. In other words, the base station 101 has taken the decision to change to the second decoding mode.

Step 613

This step is illustrated in figure 6d.

This step corresponds to step 205 in figure 2, and is an alternative step to be performed in stead of step 612.

In some embodiments, the transceiver 700 determines the change to the second decoding mode.

Step 614

This step is illustrated in figure 6a, figure 6b, figure 6d and figure 6d.

This step corresponds to step 203, 205 and 206 in figure 2 and step 304 in figure 3.

The transceiver 700 changes to a second decoding mode when the total number is above a first threshold. The second decoding mode cancels interference experienced by the transceiver 700.

In some embodiments, the transceiver 700 determines that the total number is above the first threshold.

In some embodiments, the transceiver 700 obtains information about the change to the second decoding mode based on the total number being above the first threshold, either internally or from the base station 101.

Step 615

This step is illustrated in figure 6b, figure 6c and figure 6d.

This step corresponds to step 207 in figure 2.

In some embodiments, the transceiver 700 cancels, via specific signaling processing at the receiver, interference generated by the neighbor cells 107 comprised in the second number of neighbor cells 107 using the second decoding mode. The receiver refers to the physical layer receiver of the transceiver 700.

In some embodiments, the transceiver 700 cancels interference generated by neighbor cells 107 comprised in the third number of neighbor cells 107 using the second decoding mode

In some embodiments, the transceiver 700 cancels the interference generated by the neighbor cells 107 comprised in the total number of neighbor cells 107 using the second decoding mode.

To perform the method steps shown in figure 6 for handling interference in the transceiver 700, the transceiver 700 comprises an arrangement as shown in **Figure 7**. The transceiver 700 is associated with a serving cell 103 in a communications network 100. The transceiver 700 is in a first decoding mode, and the transceiver 700 experiences interference from a plurality of neighbor cells 107. In some embodiments, interference cancellation is disabled in the first decoding mode and interference cancellation is enabled in a second decoding mode. In some embodiments, the transceiver 700 is comprised in a user equipment 105 or in a base station 101.

The transceiver 700 comprises an **establishing unit 701** configured to establish a total number of neighbor cells 107 comprised in the plurality of neighbor cells 107 generating the interference experienced by the transceiver 700.

The transceiver 700 comprises a **changing unit 705** configured to change to the second decoding mode when the total number is above a first threshold. The second decoding mode cancels interference in the transceiver 700. In some embodiments, the changing unit 705 is configured to changing to the second decoding mode based on the power of the signal received from the base station 101, the power of the reference signal associated with the serving cell 103 and the power of the reference signal associated with the neighbor cells 107 comprised in the total number. In some embodiments, the changing unit 705 is further configured to change to the second decoding mode based on the information about the radio channel.

In some embodiments, the transceiver 700 comprises a **sending unit 707** configured to send, to a base station 101, information about the neighbor cells 107 comprised in the total number.

In some embodiments, the transceiver 700 comprises a **receiving unit 710** configured to receive, from the base station 101, information about neighbor cells (107) comprised in a second number of neighbor cells 107 where the second decoding mode apply. The second number is lower or equal than the total number of neighbor cells "seen" by the transceiver 700. In some embodiments, the receiving unit 710 is further configured to receive information about a radio channel from the base station 101. In some embodiments, the receiving unit 710 is further configured to receive information from a base station 101 about a decision to change to the second decoding mode.

In some embodiments, the transceiver 700 comprises a **cancelling unit 713** configured to cancel interference generated by the neighbor cells 107 comprised in the second number using the second decoding mode. In some embodiments, the cancelling unit 713 is further configured to cancel interference generated by neighbor cells 107 comprised in the third number using the second decoding mode. In some embodiments, the cancelling unit 713 is further configured to *cancel* the interference generated by the neighbor cells 107 comprised in the total number using the second decoding mode.

In some embodiments, the transceiver 700 comprises a **determining unit 714** configured to determine the change to the second decoding mode.

In some embodiments, the transceiver 700 comprises a **processing unit 715** configured to measure a power of a signal received from a base station 101. The processing unit 715 may be further configured to measure a power of a reference signal associated with the serving cell 103. The processing unit 715 may be further configured to measure a power of a reference signal associated with the neighbor cells 107 comprised in the total number. In some embodiments, the processing unit 715 is configured to calculate a total amount of interference generated by the neighbor cells 107 in the total number based on the measured power of the signal and the measured power of the reference signal associated with the serving cell 103. In some embodiments, the processing unit 715 is configured to determine that the power of the reference signal associated with the neighbor cells 107 in the total number is above a third threshold, when the total measured amount of interference is above a second threshold. In some embodiments, the processing unit 715 is further configured to determine a third number of neighbor cells 107 where the power of the reference signal associated with the neighbor cells 107 in the total number is above the third threshold. The neighbor cells comprised in the third number is a subgroup of the neighbor cells in the total number. In some embodiments, the processing unit 715 is further configured to determine that the third number of neighbor cells 107 is above the first threshold.

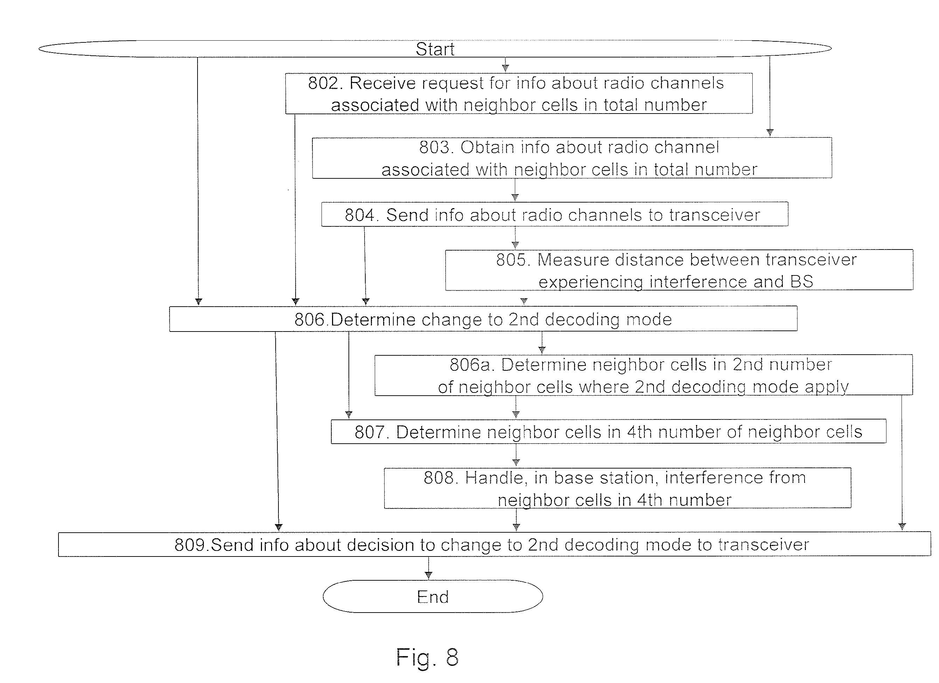

The method described above will now be described seen from the perspective of the base station 101. **Figure 8** is a flowchart describing the present method in the base station 101, for handling interference in the transceiver 700. The base station 101 is associated with a serving cell 103 in a communications network 100. The transceiver 700 is in a first decoding mode and is associated with the serving cell 103. The method comprises the following steps to be performed by the base station 101:

Step 802

This step corresponds to step 305 in figure 3 and step 420 in figure 4.

In some embodiments, the base station 101 receives, from the transceiver 700, a request for information about radio channels associated with the neighbor cells 107 comprised in the total number.

Step 803

This step corresponds to step 305 in figure 3 and step 420 in figure 4.

In some embodiments, the base station 101 obtains information about a radio channel associated with the neighbor cells 107 comprised in the total number of neighbor cells 107.

Step 804

This step corresponds to step 420 in figure 4.

In some embodiments, the base station 101 sends the information about the radio channels to the transceiver 700.

Step 805

In some embodiments, the base station 101 measures the distance between the transceiver 700 experiencing the interference and the base station 101.

Step 806

This step corresponds to step 400 and 410 in figure 4.
The base station 101 determines a change to a second decoding mode when a total number of neighbor cells 107 comprised in a plurality of neighbor cells 107 is above a first threshold. The plurality of neighbor cells 107 generates interference experienced by the transceiver 700.
In some embodiments, the base station 101 receives, from the transceiver 700, information about neighbor cells 107 comprised in the total number of neighbor cells 107 generating interference experienced by the transceiver 700.
In some embodiments, the base station 101 determines the change to the second decoding mode further based on the measured distance.

Step 806a

In some embodiments, the base station 101 determines neighbor cells 107 comprised in a second number of neighbor cells 107 where the second decoding mode apply, i.e. IC. The second number of neighbor cells 107 is lower than the total number of neighbor cells 107.

Step 807

This step corresponds to step 410 in figure 4.
In some embodiments, the base station 101 determines neighbor cells 107 comprised in a fourth number of neighbor cells 107. The fourth number is lower than the total number of neighbor cells 107. The neighbor cells comprised in the fourth number are not the same neighbor cells 107 comprised in the second number.

Step 808

This step corresponds to step 440 in figure 4.
In some embodiments, the base station 101 handles, in the base station 101, the interference from the neighbor cells 107 comprised in the fourth number of neighbor cells 107. In other words, the base station 101 performs ICIC or any other RRM technique so as to minimize other cell interference to the transceiver 700. In downlink, interference may not be cancelled at the base station 101. With ICIC the interference is not cancelled, it is minimized, avoided or reduced.

Step 809

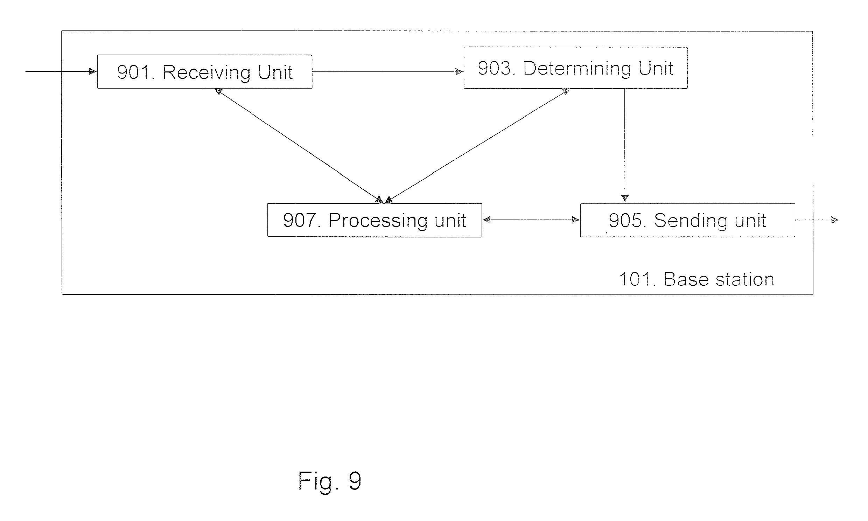

This step corresponds to step 420 in figure 4.
The base station 101 sends, to the transceiver 700 information about the determining of the change to the second decoding mode. The second decoding mode cancels interference in the transceiver 700. In some embodiments, the base station 101 further sends, to the transceiver 700, information on the DL allocation information of interfering neighbor cells 107
To perform the method steps shown in figure 8 for handling interference in the transceiver 700, the base station 101 comprises an arrangement as shown in **Figure 9**. The base station 101 serves a cell 103 in a communications network 100. The transceiver 700 is in a first decoding mode and is connected to the serving cell 103.
In some embodiments, the base station 101 comprises a **receiving unit 901** which is configured to receive, from the transceiver 700, information about neighbor cells 107 comprised in a total number of neighbor cells 107 generating interference experienced by the transceiver 700. In some embodiments, the receiving unit 901 is further configured to receive, from the transceiver 700, a request for information about radio channels associated with the neighbor cells 107 comprised in the total number.
The base station 101 comprises a **determining unit 903** configured to determine a change to the second decoding mode when a total number of neighbor cells 107 comprised in a plurality of neighbor cells 107 is above a first threshold. The determining unit 903 determines when the transceiver 700 should change to the second decoding mode. The plurality of neighbor cells 107 generates interference experienced by the transceiver 700. In some embodiments, the determining unit 903 is further configured to determine neighbor cells 107 comprised in a second number of neighbor cells 107 where the second decoding mode apply. The second number of neighbor cells 107 is lower than the total number of neighbor cells 107. In some embodiments, the determining unit 903 is further configured to determine a change to the second decoding mode further based on the measured distance. In some embodiments, the determining unit 903 is further configured to determine neighbor cells 107 comprised in a fourth number of neighbor cells 107. The fourth number of neighbor cells 107 is lower than the total number of neighbor cells 107.

The base station 101 comprises a **sending unit 905** configured to send, to the transceiver 700 information about the determining of the change to the second decoding mode. The second mode cancels interference in the transceiver 700. In some embodiments, the sending unit 905 is further configured to send the information about the radio channels and information on the DL allocation information of interfering neighbor cells (107) to the transceiver 700.

In some embodiments, the base station 101 comprises a **processing unit 907** configured to obtain the information about the radio channel associated with the neighbor cells 107 comprised in the total number. In some embodiments, the processing unit 907 is further configured to measure the distance between the transceiver 700 experiencing the interference and the base station 101. In some embodiments, the processing unit 907 is further configured to handle, in the base station 101 the interference from the neighbor cells 107 comprised in the fourth number. In some embodiments, the base station 101 handles the interference by using ICIC or in general RRM techniques for minimization of other cell interference. With ICIC, the interference is not cancelled, it is avoided or reduced.

The present mechanism for handling interference in the transceiver 700 may be implemented through one or more processors, such as a **processing unit 715** in the transceiver arrangement depicted in Figure 7 and a **processing unit 907** in the base station arrangement depicted in Figure 9, together with computer program code for performing the functions of the embodiments herein. The processor may be for example a Digital Signal Processor (DSP), Application Specific Integrated Circuit (ASIC) processor, Field-programmable gate array (FPGA) processor or micro processor. The program code mentioned above may also be provided as a computer program product, for instance in the form of a data carrier carrying computer program code for performing the embodiments herein when being loaded into the transceiver 700 and/or base station 101. One such carrier may be in the form of a CD ROM disc. It is however feasible with other data carriers such as a memory stick. The computer program code may furthermore be provided as pure program code on a server and downloaded to the transceiver 700 and/or base station 101 remotely.

The embodiments herein are not limited to the above described preferred embodiments. Various alternatives, modifications and equivalents may be used. Therefore, the above embodiments should not be taken as limiting the scope of the embodiments, which is defined by the appending claims.

It should be emphasized that figure 2 represent the transceiver behavior in case the transceiver 700 is located in the user equipment 105. The transceiver 700 might be located in either the user equipment 105 or the base station 101. Figure 2 describes also the case that the transceiver 700 is located at the base station 101. In this case though, steps 204 and 205 are not needed.

It should be emphasized that the term "comprises/comprising" when used in this specification is taken to specify the presence of stated features, integers, steps or components, but does not preclude the presence or addition of one or more other features, integers, steps, components or groups thereof. It should also be noted that the words "a" or "an" preceding an element do not exclude the presence of a plurality of such elements.

It should also be emphasized that the steps of the methods defined in the appended claims may, without departing from the embodiments herein, be performed in another order than the order in which they appear in the claims.

**Claims**

1. A method in a transceiver (700) for handling interference in the transceiver (700), the transceiver (700) being associated with a serving cell (103) in a communications network (100), the transceiver (700) being in a first decoding mode, and the transceiver (700) experiencing interference from a plurality of neighbor cells (107),
the method comprising:

> *establishing* (202, 601) a total number of neighbor cells comprised in the plurality of neighbor cells (107) generating the interference experienced by the transceiver (700);
> and
> *changing* (203, 206, 304, 614) to a second decoding mode when the total number of neighbor cells (107) is above a first threshold, which second decoding mode cancels interference experienced by the transceiver (700).

2. The method according to claim 1, further comprising:

> *sending* (204, 602), to a base station (101), information about the neighbor cells (107) comprised in the total number.

**3.** The method according to any of the claims 1 - 2, further comprising:

*receiving* (205, 606), from the base station (101), information about neighbor cells (107) comprised in a second number of neighbor cells (107) where the second decoding mode apply, which second number of neighbor cells (107) is lower or equal than the total number of neighbor cells (107); and wherein the method further comprises: *cancelling* (207, 615) interference generated by the neighbor cells (107) comprised in the second number of neighbor cells (107) using the second decoding mode.

**4.** The method according to any of the claims 1 - 3, further comprising:

*measuring* (301, 603) a power of a signal received from a base station (101);
*measuring* (301, 604) a power of a reference signal associated with the serving cell (103);
*measuring* (301, 605) a power of a reference signal associated with the neighbor cells (107) comprised in the total number of neighbor cells (107); and
wherein the changing (206, 304, 614) to the second decoding mode is based on the power of the signal received from the base station (101), the power of the reference signal associated with the serving cell (103) and the power of the reference signal associated with the neighbor cells (107) comprised in the total number of neighbor cells (107).

**5.** The method according to claim 4, further comprising;
*calculating* (302, 607) a total amount of interference generated by the neighbor cells (107) comprised in the total number of neighbor cells (107) based on the measured power of the signal and the measured power of the reference signal associated with the serving cell (103);
when the total measured amount of interference is above a second threshold, *determining* (303, 608) that the power of the reference signal associated with the neighbor cells (107) in the total number of neighbor cells (107) is above a third threshold;
*determining* (303, 609) a third number of neighbor cells (107) where the power of the reference signal associated with the neighbor cells (107) in the total number of neighbor cells (107) is above the third threshold, and which neighbor cells (107) comprised in the third number of neighbor cells (107) is a subgroup of the neighbor cells (107) in the total number of neighbor cells (107);
*determining* (303, 610) that the third number of neighbor cells (107) is above the first threshold; and
*cancelling* (207, 615) interference generated by neighbor cells (107) comprised in the third number neighbor cells (107) using the second decoding mode.

**6.** The method according to any of the claims 1 - 5, further comprising:

*receiving* (305, 611) information about a radio channel from the base station (101); and
wherein the changing (203, 206, 304, 614) to the second decoding mode is based on the information about the radio channel.

**7.** The method according to any of the claims 1 - 6, further comprising:

*receiving* (205, 612) information from a base station (101) about a decision to change to the second decoding mode.

**8.** The method according to any of the claims 1 - 6, further comprising:

*determining* (205, 613) the change to the second decoding mode.

**9.** The method according to any of the claims 1 - 8, further comprising:

*cancelling* (207, 615) the interference generated by the neighbor cells (107) comprised in the total number of neighbor cells (107) using the second decoding mode.

**10.** The method according to any of the claims 1 - 9, wherein interference cancellation is disabled in the first decoding mode and interference cancellation is enabled in the second decoding mode.

**11.** The method according to any of the claims 1 - 10, wherein the transceiver (700) is comprised in a user equipment (105) or in a base station (101).

**12.** A method in a base station (101) for handling interference in a transceiver (700), the base station (101) is associated with a serving cell (103) in a communications network (100), the transceiver (700) being in a first decoding mode and being associated with the serving cell (103), the method comprising:

*determining* (410, 806) a change to a second decoding mode when a total number of neighbor cells (107) comprised in a plurality of neighbor cells (107) is above a first threshold, which plurality of neighbor cells (107) generates interference experienced by the transceiver (700); and
*sending* (420, 809), to the transceiver (700), information about the determining of the change to the second decoding mode, which second decoding mode cancels interference in the transceiver (700).

**13.** The method according to claim 12, further comprising:

*determining* (410, 806a) neighbor cells (107) comprised in a second number of neighbor cells (107) where the second decoding mode apply, and which second number of neighbor cells (107) is lower than the total number of neighbor cells (107).

**14.** The method according to any of the claims 12 - 13, further comprising
*obtaining* (306, 803) information about a radio channel associated with the neighbor cells (107) comprised in the total number of neighbor cells (107); and
*sending* (420, 804) the information about the radio channels to the transceiver (700).

**15.** The method according to any of the claims 12 - 14, further comprising:

*measuring* (805) the distance between the transceiver (700) experiencing the interference and the base station (101);
and wherein the determining (410, 806) a change to the second decoding mode is further based on the measured distance.

**16.** The method according to any of the claims 12 - 15, further comprising:

*determining* (410, 807) neighbor cells (107) comprised in a fourth number of neighbor cells (107), which fourth number neighbor cells (107) is lower than the total number of neighbor cells (107); and
*handling* (440, 808), in the base station (101), the interference from the neighbor cells (107) comprised in the fourth number of neighbor cells (107).

**17.** A transceiver (700) for handling interference in the transceiver (700), the transceiver (700) being associated with a serving cell (103) in a communications network (100), the transceiver (700) being in a first decoding mode, and the transceiver (700) experiencing interference from a plurality of neighbor cells (107), the transceiver (700) comprising:

*an establishing unit* (701) configured to establish a total number of neighbor cells (107) comprised in the plurality of neighbor cells (107) generating the interference experienced by the transceiver (700); and
*a changing unit* (705) configured to change to the second decoding mode when the total number of neighbor cells (107) is above a first threshold, which second decoding mode cancels interference in the transceiver (700).

**18.** The transceiver (700) according to claim 17, further comprising:

*a determining unit* (714) configured to determine the change to the second decoding mode.

**19.** A base station (101) for handling interference in a transceiver (700), the base station (101) is associated with a serving cell (103) in a communications network (100), the transceiver (700) being in a first decoding mode and being associated with the serving cell (103), the base station (101) comprising:

a *determining* unit (903) configured to determine a change to the second decoding mode when a total number of neighbor cells (107) comprised in a plurality of neighbor cells (107) is above a first threshold, which plurality of neighbor cells (107) generates interference experienced by the transceiver (700); and
*a sending unit* (905) configured to send, to the transceiver (700), information about the determining of the change to the second decoding mode, which second mode cancels interference in the transceiver (700).

Fig. 1

EP 2 568 638 A1

201. Transceiver detects other cell interference from neighbor cells

202. Transceiver determines number of neighbor cells generating other cell interference

Yes — 203. Other cell interference from several (more than N) neighbor cells? — No

204. Report interfering cells to base station

205. Receive, from base station, info on which cells where IC apply

206. Switch-on IC functionality in transceiver based on IC info

207. Transceiver cancels interference from neighbor cells

208. IC functionality in transceiver remains off

209. Transceiver sends info about other cell interference from neighbor cells (less than N) to base station

Method performed by transceiver.

Assumes IC is switched off at start of the method

Fig. 2

Method performed by
transceiver.

Assumes IC is
switched off at start of
the method

301.Perform measurements

No

302.Other cell interference higher than threshold?

Yes

303.Number of neighbor cells
received with a power higher than threshold higher than M cells ?

Yes                                                No

304. Switch On IC

306.IC remains off

305. Request DL allocation information of interfering neighbor cells
(or read PDCCH of neighbor interfering cells)

Fig. 3

EP 2 568 638 A1

400. Receive list of interfering cells
from transceiver (from step 204 in fig 2)

410. Determine cells where IC apply
and cells where ICIC apply

420. Transmit info on cells to do IC on,
i.e. cell where ICIC is not applied

430. Receives info about other cell
interference from neighbor cells
from transceiver (from step 209 in fig.2)

440. Apply ICIC onto up to N cells,
or where ICIC may be applied

Method performed by
base station.

Assumes IC is
switched off in
transceiver at start of
the method

Fig. 4

Fig. 5

EP 2 568 638 A1

```
              ┌─────────────────┐
              │      Start       │
              └─────────────────┘
                       │
                       ▼
┌──────────────────────────────────────────────────────────────────────────┐
│  601. Establish total number of cells generating interference experienced by transceiver │
└──────────────────────────────────────────────────────────────────────────┘
                       ┊
                       ▼
              ┌───────────────────────────────────────┐
              │  614. Change to 2nd decoding mode when  │
              │   total number is above 1st threshold   │
              └───────────────────────────────────────┘
                       ┊
                       ▼
              ┌─────────────────┐
              │       End        │
              └─────────────────┘
```

Fig. 6a

601. Establish total number of cells generating interference experienced by transceiver

602. Send info about total number of interfering cells to BS

603. Measure power of signal received from BS

604. Measure power of ref. signal associated with serving cell

605. Measure power of ref. signal associated with neighbor cells in total number

606. Receive, from BS, info about cells in 2nd number where 2nd mode apply

614. Change to 2nd decoding mode when total number is above 1st threshold

615. Cancel interference generated by cells in 2nd number using 2nd mode

End

Fig. 6b

EP 2 568 638 A1

601. Establish total number of cells generating interference experienced by transceiver

602. Send info about cells in total number to BS

603. Receive, from BS, info about cells in 2nd number where 2nd mode apply

606. Measure power of ref. signal associated with neighbor cells in total number

607. Calculate/estimate total amount of interference generated cells in total number based on measured power of signal and measured power of ref. signal associated with serving cell

608. Determine that total measured amount of interference is above 2nd threshold

609. Determine 3rd number of cells where power of ref signal associated with cells in total number is above 3rd threshold

610. Determine that 3rd number is above 1st threshold

614. Change to 2nd decoding mode when total number is above 1st threshold

615. Cancel interference generated by cells in 2nd number using 2nd mode

End

Fig. 6c

EP 2 568 638 A1

601. Establish total number of cells generating interference experienced by transceiver

602. Send info about cells in total number to BS

603. Receive, from BS, info about cells in
2nd number where 2nd mode apply

606. Measure power of ref. signal associated
with neighbor cells in total number

610. Determine that 3rd number is above 1st threshold

611. Receive info about radio channel from BS

612. Receive info from BS about decision to change to 2nd mode

613. Determine change to 2nd mode

614. Change to 2nd decoding mode when
total number is above 1st threshold

615. Cancel interference generated by cells in 2nd number using 2nd mode

End

Fig. 6d

701. Establishing unit

707. Sending unit

715. Processing unit

713. Cancelling unit

714. Determining unit

710. Receiving unit

705. Changing unit

700. Transceiver

Fig. 7

Start

802. Receive request for info about radio channels
associated with neighbor cells in total number

803. Obtain info about radio channel
associated with neighbor cells in total number

804. Send info about radio channels to transceiver

805. Measure distance between transceiver
experiencing interference and BS

806.Determine change to 2nd decoding mode

806a. Determine neighbor cells in 2nd number
of neighbor cells where 2nd decoding mode apply

807. Determine neighbor cells in 4th number of neighbor cells

808. Handle, in base station, interference from
neighbor cells in 4th number

809.Send info about decision to change to 2nd decoding mode to transceiver

End

Fig. 8

Fig. 9

Europäisches
Patentamt

European
Patent Office

Office européen
des brevets

## EUROPEAN SEARCH REPORT

Application Number

EP 11 18 0676

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2011/092257 A1 (ICERA INC [US]; LUSCHI CARLO [GB]; WALKER SIMON NICHOLAS [GB]) 4 August 2011 (2011-08-04) * page 1, line 3 - page 14, line 12; figures 1-7 * ----- | 1-19 | INV. H04L1/00 H04B1/7097 |
| A | EP 1 793 507 A1 (SAMSUNG ELECTRONICS CO LTD [KR]) 6 June 2007 (2007-06-06) * the whole document * ----- | 1-19 | |

TECHNICAL FIELDS
SEARCHED        (IPC)

H04L
H04B

The present search report has been drawn up for all claims

| Place of search | Date of completion of the search | Examiner |
|---|---|---|
| Munich | 10 November 2011 | Courville, Nicolas |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

...........................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 11 18 0676

This annex lists the patent family members relating to the patent documents cited in the above-mentioned European search report.
The members are as contained in the European Patent Office EDP file on
The European Patent Office is in no way liable for these particulars which are merely given for the purpose of information.

10-11-2011

| Patent document cited in search report | Publication date | Patent family member(s) | | Publication date |
|---|---|---|---|---|
| WO 2011092257 A1 | 04-08-2011 | NONE | | |
| EP 1793507 A1 | 06-06-2007 | WO | 2007064179 A1 | 07-06-2007 |
| | | US | 2007149242 A1 | 28-06-2007 |